# EUROPÄISCHE PATENTSCHRIFT

(11) **EP 3 269 002 B1**
(45) Veröffentlichungstag und Bekanntmachung des Hinweises auf die Patenterteilung: **29.08.2018**
(21) Anmeldenummer: 16704391.8
(22) Anmeldetag: 12.02.2016
(51) Int. Cl.: H01M 8/04029, H01M 8/04223, H01M 8/04111, B60L 11/18

(54) **KÜHLANORDNUNG ZUM KÜHLEN EINER BRENNSTOFFZELLE**
COOLING ASSEMBLY FOR COOLING A FUEL CELL
DISPOSITIV DE REFROIDISSEMENT POUR REFROIDIR UNE PILE À COMBUSTIBLE

(30) Priorität: 10.03.2015 DE 102015003028
(43) Veröffentlichungstag der Anmeldung: 17.01.2018
(73) Patentinhaber: Daimler AG, 70327 Stuttgart (DE)
(72) Erfinder: BÜHLER, Maximilian, 87600 Kaufbeuren (DE); PASERA, Uwe, 73732 Esslingen (DE); SCHMID, Ottmar, 88677 Markdorf (DE); VOGEL, Bernhard, 70372 Stuttgart (DE)
(74) Vertreter: JENSEN & SON
(86) Internationale Anmeldenummer: PCT/EP2016/000241
(87) Internationale Veröffentlichungsnummer: WO 2016/142029

(56) Entgegenhaltungen:
- EP-A2- 1 111 214
- DE-B4- 10 203 311
- US-A1- 2001 050 191

## Beschreibung

Die Erfindung betrifft eine Kühlanordnung zum Kühlen einer Brennstoffzelle in einem Brennstoffzellensystem nach der im Oberbegriff von Anspruch 1 näher definierten Art.

Kühlanordnungen zum Kühlen einer Brennstoffzelle sind aus dem allgemeinen Stand der Technik bekannt. Insbesondere bei Fahrzeuganwendungen von Brennstoffzellen bzw. Brennstoffzellensystemen spielt eine hocheffiziente Kühlung einerseits, und eine gute Möglichkeit die Brennstoffzelle im Falle eines Kaltstarts schnell zu erwärmen andererseits, eine entscheidende Rolle.

Aus der gattungsgemäßen DE 102 03 311 B4 ist ein Brennstoffzellensystem mit einem Kühlkreislauf näher bekannt. Aus den oben genannten Gründen weist dieser Kühlkreislauf einen steuerbaren Kühlerbypass auf, um so im regulären Betrieb eine Durchströmung des Kühlwärmetauschers mit dem flüssigen Kühlmedium zu erreichen und für den Kaltstartfall den Kühlwärmetauscher zu umgehen, um so die Brennstoffzelle schneller erwärmen zu können. Dieser "kleine" Kühlkreislauf durch den Kühlerbypass umfasst dabei neben einem Brennstoffzellenwärmetauscher einen Ladeluftkühler sowie eine Kühlmittelpumpe. Im Kaltstartfall kann so über den Brennstoffzellenwärmetauscher die Brennstoffzelle mit Wärme aus dem Ladeluftkühler vergleichsweise schnell erwärmt werden. Im regulären Betrieb wird dann sowohl der Ladeluftkühler als auch die Brennstoffzelle über den Brennstoffzellenwärmetauscher gekühlt, wobei das im Ladeluftkühler und dem Brennstoffzellenwärmetauscher erwärmte flüssige Kühlmedium über den Kühlwärmetauscher abgekühlt wird. Der im gattungsgemäßen Stand beschriebene Aufbau der Kühlanordnung hat dabei im Kern zwei Nachteile. Einerseits führt die Anordnung des Ladeluftkühlers und des Brennstoffzellenwärmetauschers im kleinen Kühlkreislauf zwar zu einer schnellen Erwärmung der Brennstoffzelle im Kaltstartfall. Andererseits hat der dort beschriebene Aufbau, bei welchem zuerst der Ladeluftkühler und dann die Brennstoffzelle durchströmt wird, für den regulären Betrieb, also einen Kühlbetrieb für die Brennstoffzelle, den Nachteil, dass das Kühlmedium über den Ladeluftkühler schon relativ stark erwärmt worden ist, bevor es in den Brennstoffzellenwärmetauscher strömt. Dies beeinträchtigt eine effiziente Kühlung der Brennstoffzelle. Ein weiterer sehr gravierender Nachteil besteht darin, dass die Kühlmittelpumpe für den Höchstlastbetrieb der Kühlung ausgelegt werden muss. Sie ist daher für den Kaltstartfall und den Betrieb des kleinen Kühlkreislaufs überdimensioniert und hat bei den dort auftretenden benötigten Volumenströmen und Förderleistungen einen dementsprechend schlechteren Wirkungsgrad. Dies stellt einen erheblichen Nachteil dar, insbesondere da in diesen Situationen die gesamte zum Erwärmen der Brennstoffzelle notwendige Leistung zuerst aus einem elektrischen Energiespeicher, beispielsweise einer Batterie, kommen muss. Eine in dieser Situation ineffiziente Kühlmittelpumpe führt daher zu der Notwendigkeit einer vergleichsweise großen elektrischen Energiespeichereinrichtung, mit den entsprechenden Nachteilen hinsichtlich Bauraum und Kosten. Insbesondere bei einer Anwendung in einem Fahrzeug stellt dies einen erheblichen Nachteil dar.

Aus dem weiteren Stand der Technik in Form der EP 1 836 742 B1 ist ein ähnlicher Aufbau mit einem in mehrere Zweige unterteilten Hauptkühlkreislauf und einem im Kaltstartfall betriebenen kleinen Kühlkreislauf mit dem Brennstoffzellenwärmetauscher und einer Heizeinrichtung bekannt. Der Aufbau ist, wie es bereits aus der Darstellung der Figur zu erkennen ist, außerordentlich komplex und erfordert eine Vielzahl von Ventileinrichtungen, welche entsprechend viel Bauraum benötigen sowie Ansteuerungsbedarf und Kosten verursachen. Ein weiterer Nachteil ist hier der Antrieb der Kühlmittelpumpe im kleinen Kühlkreislauf über einen Expander und damit indirekt über die Hauptkühlmittelpumpe. Dieser Aufbau weist einen entsprechend schlechten Wirkungsgrad auf, sodass hier für den Fall eines Kaltstarts die Hauptkühlmittelpumpe noch mehr Leistung benötigt, als bei dem zuvor beschriebenen Ausführungsbeispiel, sodass auch diese Anordnung, zusätzlich zu den bereits genannten Nachteilen, den oben beschriebenen gravierenden Nachteil hinsichtlich des hohen Leistungsbedarfs im Kaltstart aufweist.

Die Aufgabe der hier vorliegenden Erfindung besteht nun darin, eine Kühlanordnung für eine Brennstoffzelle in einem Brennstoffzellensystem anzugeben, welche gegenüber dem Stand der Technik verbessert ist, und welche insbesondere die oben genannten Nachteile vermeidet.

Erfindungsgemäß wird diese Aufgabe durch eine Kühlanordnung mit den Merkmalen im Anspruch 1 gelöst. Vorteilhafte Ausgestaltungen und Weiterbildungen der erfindungsgemäßen Kühlanordnung ergeben sich aus den hiervon abhängenden Unteransprüchen.

Bei der erfindungsgemäßen Kühlanordnung ist es ähnlich wie im gattungsgemäßen Stand der Technik vorgesehen, dass die Kühlanordnung wenigstens zwei fluidisch miteinander verbundene Kühlkreisläufe aufweist, in welchen ein flüssiges Kühlmedium strömt. Der erste Kühlkreislauf umfasst dabei eine erste Kühlmittelpumpe, einen Brennstoffzellenwärmetauscher, eine Heizeinrichtung sowie einen Ladeluftkühler. Der zweite Kühlkreislauf umfasst einen Kühlwärmetauscher zur Abkühlung des Kühlmediums. Erfindungsgemäß ist es dabei vorgesehen, dass eine zusätzliche Kühlmittelpumpe vorhanden ist. Der Aufbau kann nun so betrieben werden, dass beispielsweise für den Kaltstartfall im Wesentlichen der erste Kühlkreislauf mit seiner Kühlmittelpumpe, dem Brennstoffzellenwärmetauscher, dem Ladeluftkühler sowie der Heizeinrichtung betrieben wird. Durch die Heizeinrichtung und sobald die Luftzufuhr zu der Kathodenseite der Brennstoffzelle gestartet ist durch die nach der Verdichtung heiße Zuluft, wird Wärme in das flüssige Kühlmedium in dem ersten Kühlkreislauf eingetragen. Da dieser unabhängig vom zweiten Kühlkreislauf betrieben werden kann, kann so bei entsprechend geringer thermischer Masse eine effiziente Beheizung der Brennstoffzelle über die Wärme aus der verdichteten Zuluft und die über die Heizeinrichtung, beispielsweise eine elektrische Widerstandheizung, eingebrachte Wärme erfolgen. Dadurch, dass der erste Kühlkreislauf unabhängig vom zweiten Kühlkreislauf betrieben werden kann, wird eine Abkühlung des flüssigen Kühlmediums im Kühlwärmetauscher verhindert, sodass der Aufbau sich entsprechend schnell erwärmt.

Anders als bei einer Lösung mit einem Kühlerbypass um den Kühlwärmetauscher, wie sie aus dem Stand der Technik bekannt ist, hat dieser Aufbau dabei den entscheidenden Vorteil, dass durch die zweite Kühlmittelpumpe, welche in dieser Situation einer Erwärmung der Brennstoffzelle typischerweise nicht betrieben werden muss, eine vergleichsweise effiziente Umwälzung des flüssigen Kühlmediums in dem ersten Kühlkreislauf erfolgen kann. Die erste Kühlmittelpumpe kann nämlich auf einen geringeren Volumenstrom und eine geringere Förderleistung hin optimiert sein, als die Pumpen im Stand der Technik. Damit kann bei idealem Wirkungsgrad der ersten Kühlmittelpumpe für den beschriebenen Einsatzzweck eine sehr effiziente Umwälzung des flüssigen Kühlmediums zur Erwärmung der Brennstoffzelle erreicht werden. Dies stellt insbesondere bei einer Anwendung in einem Fahrzeug, in welchem die hierfür notwendige elektrische Leistung für die Kühlmittelpumpe, zumindest in der Anfangsphase, aus einer elektrischen Energiespeichereinrichtung stammt, einen erheblichen Vorteil hinsichtlich der Kapazität und des Aufbaus der elektrischen Energiespeichereinrichtung dar.

In einer regulären Betriebssituation, in der die Brennstoffzelle gekühlt werden muss, beispielsweise beim Kühlen der Brennstoffzelle im Volllastbetrieb eines mit dem Brennstoffzellensystem ausgestatteten Fahrzeugs, können dann beide Kühlmittelpumpen in Reihe hintereinander die Förderung des flüssigen Kühlmediums übernehmen. Hierdurch wird ein entsprechend großer Volumenstrom möglich, wobei die einzelnen Kühlmittelpumpen dennoch klein und effizient auf die jeweilige Betriebssituation, in denen sie die hauptsächliche Last der Förderung des Volumenstroms an flüssigem Kühlmedium übernehmen müssen, hin optimiert werden können. Es lassen sich also beispielsweise zwei kleine und damit kostengünstige Pumpen einsetzen, welche zusammen die geforderte Maximalleistung liefern, und, sofern sie jeweils alleine betrieben werden, einen geringeren Volumenstrom bei hohem Wirkungsgrad bereitstellen können.

Eine weitere sehr günstige Ausgestaltung der erfindungsgemäßen Kühlanordnung sieht es dabei vor, dass der Ladeluftkühler in Strömungsrichtung des Kühlmediums nach dem Brennstoffzellenwärmetauscher angeordnet ist. Diese Anordnung des Ladeluftkühlers in Strömungsrichtung des Kühlmediums nach dem Brennstoffzellenwärmetauscher stellt im regulären Betrieb sicher, dass das Kühlmedium, bevor es in die Brennstoffzelle eintritt, nicht durch den Ladeluftkühler bereits entsprechend stark erwärmt worden ist, was einen nicht unerheblichen Nachteil darstellen würde. Vielmehr kann über die beschriebene Anordnung erreicht werden, dass die Brennstoffzelle mit vergleichsweise kühlem Kühlmedium angeströmt und zuverlässig und effizient gekühlt wird. Die Temperatur des Kühlmediums, wenn dieses die Brennstoffzelle bzw. den Brennstoffzellenwärmetauscher wieder verlässt, ist dabei immer noch ausreichend, um die nach dem Verdichten vergleichsweise heiße Zuluft so weit abzukühlen, wie es für den sicheren Betrieb der Brennstoffzelle notwendig ist. Das Kühlmedium wird dann nach dem Ladeluftkühler eine entsprechend hohe Temperatur haben. Idealerweise strömt es im Kühlbetrieb dann mehr oder weniger direkt zum Kühlwärmetauscher. In diesem hängt die mögliche Abkühlung typischerweise von der Temperaturdifferenz zwischen der Umgebungsluft und dem in dem Kühlwärmetauscher einströmenden flüssigen Kühlmedium ab. Je höher diese Temperaturdifferenz ist, je höher also die Temperatur des flüssigen Kühlmediums an dieser Stelle der Kühlanordnung -bei typischerweise nicht zu beeinflussender Umgebungstemperatur- ist, desto besser und effizienter die Abkühlung. Durch die Anordnung des Ladeluftkühlers in Strömungsrichtung des Kühlmediums, idealerweise direkt vor dem Kühlwärmetauscher, wird also eine besonders effiziente Abkühlung des flüssigen Kühlmediums erreicht. Dementsprechend kann die Fläche des Kühlwärmetauschers verringert oder bei gleicher Fläche eine höhere Kühlleistung erzielt werden. Dies ist insbesondere bei Fahrzeuganwendungen von entscheidendem Vorteil, da hier die zur Verfügung stehende Fläche des Kühlwärmetauschers typischerweise durch Designvorgaben ist, was bei regulären Kühlanordnungen für Brennstoffzellen, aufgrund der vergleichsweise niedrigen Betriebstemperatur einer Brennstoffzelle im Vergleich zu einem Verbrennungsmotor, einen gravierenden Nachteil darstellt. Dieser kann durch die beschriebene Anordnung des Ladeluftkühlers in Strömungsrichtung nach dem Brennstoffzellenwärmetauscher deutlich verringert werden.

Im Heizbetrieb, bei welchem die Brennstoffzelle aufgeheizt werden soll, wird bei der erfindungsgemäßen Kühlanordnung nur der erste Kühlkreislauf mit einer vergleichsweise kleinen thermischen Masse durchströmt. In diesem Fall spielt es annähernd keine Rolle, ob der Ladeluftkühler in Strömungsrichtung des Kühlmediums vor oder nach der Brennstoffzelle angeordnet ist. Aufgrund der vergleichsweise kurzen Lauflänge des flüssigen Kühlmediums in dem ersten Kühlkreislauf wird die Wärme aus dem Ladeluftkühler nach dem Durchströmen des gesamten ersten Kreislaufs auch bei der oben beschriebenen Anordnung vergleichsweise effizient in den Brennstoffzellenwärmetauscher gebracht. Aufgrund der oben beschriebenen Vorteile im regulären Betrieb ist die Anordnung gemäß dieser Ausgestaltung der Erfindung daher in jedem Fall zu bevorzugen. Ein weiterer Vorteil der Anordnung des Ladeluftkühlers und des Brennstoffzellenwärmetauschers im selben (kleinen) Kühlkreislauf liegt außerdem darin, dass die Luft für die Kathodenseite der Brennstoffzelle und das Kühlmedium für den Brennstoffzellenwärmetauscher durch den Ladeluftkühler gleichmäßig temperiert werden. Hierdurch lässt sich ein guter Wasserhaushalt in der Brennstoffzelle erreichen. Durch die gleichmäßige Erwärmung der Brennstoffzelle selbst über den Brennstoffzellenwärmetauscher sowie über die zur Kathodenseite der Brennstoffzelle strömenden Luft aus dem Ladeluftkühler wird neben einem guten Wasserhaushalt auch der Eintrag von thermischen Spannungen in den Bereich der Brennstoffzelle verringert, was zu einer höheren Lebensdauer der Brennstoffzelle führt, da Spanneinrichtungen und Dichtungen des Brennstoffzellenstapels weit weniger belastet werden, als wenn die Brennstoffzelle selbst und die in sie einströmende Luft größere Temperaturunterschiede aufweisen.

Eine weitere sehr günstige Ausgestaltung der erfindungsgemäßen Kühlanordnung sieht ferner einen Raumwärmetauscher zur zumindest mittelbaren Erwärmung eines Raumes in einem der Kühlkreisläufe vor. Ein solcher Raumwärmetauscher dient zur Erwärmung eines im Bereich des Brennstoffzellensystems angeordneten Raums. Er kann bei der bevorzugten Anwendung in einem Fahrzeug insbesondere ein Innenraumwärmetauscher sein, über welchen ein Fahrgastinnenraum erwärmt werden kann. Gemäß einer sehr vorteilhaften Weiterbildung dieser Idee ist der Raumwärmetauscher dabei in dem ersten Kühlkreislauf vorgesehen. Der Raumwärmetauscher kann also in besonders vorteilhafter Art und Weise zusammen mit der Brennstoffzelle, der Heizeinrichtung sowie dem Ladeluftkühler und der ersten Kühlmittelpumpe in dem ersten Kühlkreislauf vorgesehen sein. Hierdurch ist es möglich, eine Erwärmung des Raumes, insbesondere des Innenraumes eines Fahrzeuges, über den Raumwärmetauscher bereits sehr früh nach dem Start des Fahrzeuges mit vorzunehmen, um so einen hohen thermischen Komfort für die Nutzer des Fahrzeugs zu ermöglichen.

Eine weitere sehr vorteilhafte Ausgestaltung der Idee sieht es nun ferner vor, dass der zweite Kühlkreislauf zwei Teilkreisläufe aufweist, welche beide eine Kühlmittelpumpe umfassen, wobei der Raumwärmetauscher und die Heizeinrichtung in demselben Teilkreislauf angeordnet sind, und wobei der Brennstoffzellenwärmetauscher in dem anderen Teilkreislauf angeordnet ist. Durch diesen Aufbau mit einer Aufteilung des ersten Kühlkreislaufs in zwei Teilkreisläufe wird es möglich, diese Teilkreisläufe, welche jeweils eine Kühlmittelpumpe aufweisen, unabhängig voneinander zu betreiben. So kann insbesondere ein hoher Komfort für den Raum, insbesondere den Innenraum eines Fahrzeugs, bereitgestellt werden. Es kann nämlich über einen Betrieb nur eines Teilkreislaufs, welcher eine Kühlmittelpumpe, den Raumwärmetauscher und die Heizeinrichtung aufweist, eine Beheizung des Raumes erfolgen, ohne dass hierfür die Brennstoffzelle bzw. das Brennstoffzellensystem mit aufgeheizt bzw. gestartet werden muss. Andererseits ermöglicht ein Betrieb des zweiten Teilkreislaufs auch eine Aufheizung nur der Brennstoffzelle, ohne dass der Innenraum mit erwärmt wird. Dies wäre zwar auch durch eine Nichtdurchströmung des Raumwärmetauschers mit Raumluft denkbar, in diesem Fall wäre aber der zusätzliche Strömungswiderstand des Raumwärmetauschers in dem kleinen Kühlkreislauf vorhanden, sodass durch den alternativen Aufbau mit den Teilkreisläufen eine weitere Optimierung der zum Aufheizen der Brennstoffzelle über den ersten Kühlkreislauf benötigten Energie erreicht werden kann.

Gemäß einer weiteren Ausgestaltung der erfindungsgemäßen Kühlanordnung kann es auch vorgesehen sein, dass der Raumwärmetauscher in einer Kühlerbypassleitung zu dem Kühlwärmetauscher angeordnet ist. Der Raumwärmetauscher kann so als Alternative oder ergänzend parallel durchströmt zu dem Kühlwärmetauscher angeordnet sein und so, für den Fall, dass der Raum beheizt werden soll, die Abkühlung des Kühlmediums, insbesondere im regulären Betrieb des Brennstoffzellensystems, mit unterstützen. Gleichzeitig können Bauteile eingespart werden, da durch die Anordnung in der Kühlerbypassleitung kein zusätzlicher Leitungszweig für den Raumwärmetauscher bei vergleichbarer Funktionalität notwendig wird.

Eine weitere sehr günstige Ausgestaltung der erfindungsgemäßen Kühlanordnung kann außerdem wenigstens einen Heizwärmetauscher zum Erwärmen einer diesem zugeordneten Komponente in Strömungsrichtung vor dem Brennstoffzellenwärmetauscher aufweisen. Ein solcher Heizwärmtauscher kann also zum Erwärmen einer weiteren Komponente oder eines weiteren Mediums dienen. Damit wird über den Heizwärmetauscher eine Abkühlung des flüssigen Kühlmediums in dem Kühlkreislauf erreicht. Der Heizwärmetauscher kann beispielsweise in dem Brennstoffzellensystem genutzt werden, um expandierten Brennstoff für die Brennstoffzelle zu beheizen. Wird beispielsweise Wasserstoff aus einem Druckgasspeicher bei einem Nenndruck von 70 MPa verwendet, dann muss dieser typischerweise auf ein sehr viel niedrigeres Druckniveau entspannt werden, bevor er in die Brennstoffzelle eingeleitet wird. Bei dieser Entspannung auf ein niedrigeres Druckniveau kühlt sich der Wasserstoff sehr stark ab. Dies könnte in der Brennstoffzelle zu thermischen Spannungen und gegebenenfalls zu einem Auskondensieren - und schlimmstenfalls Einfrieren - von Feuchtigkeit führen. Daher wird der expandierte Wasserstoff typischerweise erwärmt. Dies kann nun über einen Heizwärmetauscher erfolgen, welcher bei der erfindungsgemäßen Kühlanordnung in der beschriebenen vorteilhaften Ausgestaltung in Strömungsrichtung vor dem Brennstoffzellenwärmetauscher angeordnet ist. Hierdurch kann die Temperatur des flüssigen Kühlmediums vor dem Brennstoffzellenwärmetauscher weiter abgesenkt werden, um so eine besonders effiziente Kühlung der Brennstoffzelle im regulären Betrieb zu gewährleisten.

Der Heizwärmetauscher kann vorteilhafterweise in dem zweiten Kühlkreislauf in Strömungsrichtung nach dem Kühlwärmetauscher vorgesehen sein. Er kann alternativ oder ergänzend zur Erwärmung des expandierten Wasserstoffs auch zur Beheizung eines Wasserabscheiders, beispielsweise eines Wasserabscheiders in der Kathodenabluft der Brennstoffzelle eingesetzt werden, um hier ein Einfrieren desselben zu verhindern. Über beide Funktionalitäten, welche alternativ zueinander oder auch in Reihe zueinander, vorzugsweise mit einer Durchströmung zuerst des Heizwärmetauschers für den expandierten Brennstoff und dann des Heizwärmetauschers für den Wasserabscheider, angeordnet sein können, wird in jedem Fall die Temperatur des flüssigen Kühlmediums verringert, was bei der Kühlung der Brennstoffzelle einen Vorteil ermöglicht.

Der oder die Heizwärmetauscher können dabei gemäß einer vorteilhaften Weiterbildung zusammen mit einem lonentauscher in Reihe oder parallel von dem flüssigen Kühlmedium durchströmt werden. Auch im Bereich eines lonentauschers wird die Temperatur verringert. Außerdem lässt sich durch eine vergleichsweise geringe Temperatur des flüssigen Kühlmediums die Lebensdauer des lonentauschers erhöhen. Sowohl der lonentauscher als auch der oder die Heizwärmetauscher können dabei gemäß einer vorteilhaften Weiterbildung der Idee parallel zu einer der Kühlmittelpumpen angeordnet sein. Hierdurch kommt es zu einer ausreichenden Durchströmung mit dem Kühlmedium im Kühlbetrieb für die Brennstoffzelle, ohne dass der gesamte Volumenstrom des flüssigen Kühlmediums durch die Bauteile strömen muss, was einerseits nicht notwendig ist und andererseits zu höheren Druckverlusten und dementsprechend einem schlechten energetischen Wirkungsgrad führen würde.

Weitere vorteilhafte Ausgestaltungen der erfindungsgemäßen Kühlanordnung ergeben sich ferner aus den weiteren abhängigen Unteransprüchen und werden anhand der Ausführungsbeispiele deutlich, welche nachfolgend unter Bezugnahme auf die Figuren näher dargestellt sind.

Dabei zeigen:
- Fig. 1: ein prinzipmäßig dargestelltes Brennstoffzellenfahrzeug;
- Fig. 2: eine erste mögliche Ausführungsform der Kühlanordnung in zwei unterschiedlichen Betriebszuständen;
- Fig. 3: eine zweite mögliche Ausführungsform der Kühlanordnung in zwei unterschiedlichen Betriebszuständen; und
- Fig. 4: eine dritte mögliche Ausführungsform der Kühlanordnung in drei unterschiedlichen Betriebszuständen.

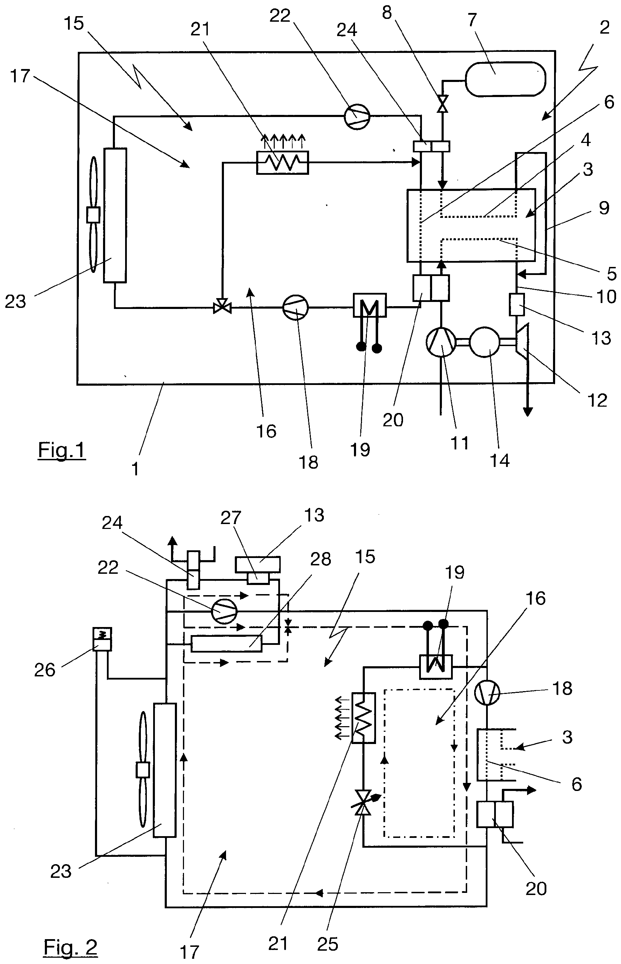

In der Darstellung der Figur 1 ist sehr stark schematisiert ein Fahrzeug 1 angedeutet. Dieses Fahrzeug 1 soll als Brennstoffzellenfahrzeug ausgebildet sein. Die elektrische Antriebsleistung für das Fahrzeug 1 wird über ein Brennstoffzellensystem 2 zur Verfügung gestellt, welches in der Darstellung der Figur 1 sehr stark schematisiert angedeutet ist. Den Kern des Brennstoffzellensystems 2 bildet eine Brennstoffzelle 3, welche insbesondere als Stapel von Einzelzellen, vorzugsweise in PEM-Technologie, ausgeführt sein kann. Rein beispielhaft ist innerhalb der Brennstoffzelle 3 ein gemeinsamer Anodenbereich 4, ein gemeinsamer Kathodenbereich 5 sowie ein Brennstoffzellenwärmetauscher 6 zur Temperierung der Brennstoffzelle 3 angedeutet.

Dem Anodenbereich 4 der Brennstoffzelle 3 wird Wasserstoff als Brennstoff zur Verfügung gestellt. Dieser Wasserstoff ist bei einem Nenndruck von beispielsweise 70 MPa in einem Druckgasspeicher 7 gespeichert und strömt über eine Regel- und Dosiereinheit 8 zu dem Anodenbereich 4 der Brennstoffzelle 3. Nicht verbrauchter Wasserstoff gelangt in dem hier dargestellten Ausführungsbeispiel über eine Abgasleitung 9 in den Bereich einer später noch näher erläuterten Abluftleitung 10 aus dem Kathodenbereich 5 der Brennstoffzelle 3. Diesem Kathodenbereich 5 der Brennstoffzelle 3 wird Luft als Sauerstofflieferant über eine Luftfördereinrichtung 11 zur Verfügung gestellt. Diese Luftfördereinrichtung 11 kann beispielsweise als Strömungsverdichter ausgebildet sein. Die Restluft aus dem Kathodenbereich 5 der Brennstoffzelle 3 gelangt über die bereits erwähnte Abluftleitung 10 zu einer Abluftturbine 12, in deren Bereich thermische Energie und Druckenergie aus der Abluft zumindest teilweise zurückgewonnen wird. Über die durch die Abluftleitung 10 strömende Abluft wird außerdem das über die Abgasleitung 9 aus dem Anodenbereich 4 abströmende Abgas, welches immer auch Restwasserstoff enthalten kann, verdünnt. Dabei kann auf der Anodenseite der Brennstoffzelle 3 außerdem ein sogenannter Anodenkreislauf vorgesehen sein. Dieser ist nicht dargestellt. Er ist einem Fachmann der Brennstoffzellentechnik jedoch geläufig, sodass dieser ihn hier ohne Probleme ergänzen könnte. Vergleichbares gilt für einen Luftbefeuchter auf der Kathodenseite.

Um die Abluftturbine 12 vor Flüssigkeitströpfchen zu schützen, ist typischerweise in der Abluftleitung 10 außerdem ein Flüssigkeitsabscheider bzw. Wasserabscheider 13 vorgesehen. Dieser Wasserabscheider 13 trennt flüssige Tröpfchen aus der Abluft in der Abluftleitung 10 ab und führt diese in flüssiger Form ab. Die Abluft selbst strömt durch die Abluftleitung 10 weiter zur Abluftturbine 12. Die Abluftturbine 12 ist zusammen mit der Luftfördereinrichtung 11 auf einer gemeinsamen Welle angeordnet, welche außerdem in Wirkverbindung mit einer elektrischen Maschine 14 steht. Diese elektrische Maschine 14 kann insbesondere die zusätzlich zur von der Abluftturbine 12 gelieferten Leistung benötigte Leistung für den Antrieb der Luftfördereinrichtung 11 bereitstellen. In bestimmten Situationen, wenn im Bereich der Abluftturbine 12 mehr Leistung anfällt, als von der Luftfördereinrichtung 11 benötigt wird, kann die elektrische Maschine 14 außerdem generatorisch betrieben werden. Dieser Aufbau ist dem Fachmann ebenfalls geläufig und wird häufig als elektrischer Turbolader, ETC (Electric Turbo Charger) oder motorunterstützter Turbolader bezeichnet.

Um die Brennstoffzelle 3 über den Brennstoffzellenwärmetaucher 6 im regulären Betrieb abkühlen zu können, ist in dem Fahrzeug 1 außerdem eine Kühlanordnung 15 vorgesehen. Diese Kühlanordnung 15 umfasst in dem hier dargestellten Ausführungsbeispiel einen ersten Kühlkreislauf 16, welcher auch als kleiner Kühlkreislauf bezeichnet werden könnte. Er steht in fluidischer Verbindung mit einem zweiten (großen) Kühlkreislauf 17. Das flüssige Kühlmedium wird im Bereich des ersten Kühlkreislaufs 16 durch eine erste Kühlmittelpumpe 18 gefördert und durchströmt eine Heizeinrichtung 19 für das flüssige Kühlmedium, welche in dem dargestellten Ausführungsbeispiel als elektrische Widerstandsheizung angedeutet ist. Genauso gut könnte die Heizeinrichtung andersartig ausgebildet sein, beispielsweise indem Wasserstoff über eine Flammverbrennung oder eine katalytische Verbrennung umgesetzt und die Abwärme dem flüssigen Kühlmedium zugeführt wird. Im ersten Kühlkreislauf befindet sich außerdem ein Ladeluftkühler 20. Dieser Ladeluftkühler 20 ist als Wärmetauscher ausgebildet, welcher auf seiner einen Seite von der heißen verdichteten Zuluft zum Kathodenbereich 5 der Brennstoffzelle nach der Luftfördereinrichtung 11 durchströmt wird. Die in wärmeleitendem Kontakt hierzu stehende andere Seite des Ladeluftkühlers 20 wird von dem flüssigen Kühlmedium durchströmt. Hierdurch wird die heiße verdichtete Luft abgekühlt, sodass die Brennstoffzelle 3 durch die Luft thermisch nicht belastet wird und ihre Membranen nicht ausgetrocknet werden. Gleichzeitig hierzu wird natürlich das flüssige Kühlmedium durch den Ladeluftkühler 20 erwärmt. Eine weitere Komponente innerhalb des ersten Kühlkreislaufs 16 ist ein Raumwärmetauscher 21, über welchen bei Bedarf der Innenraum des Fahrzeugs erwärmt werden kann, indem der Raumwärmetauscher 21, wie es durch die Pfeile angedeutet ist, von Luft, welche in den Innenraum des Fahrzeugs 1 einströmt oder in diesem umgewälzt wird, durchströmt wird.

Ein weiterer Teil des ersten Kühlkreislaufs 16 ist in Strömungsrichtung nach dem Raumwärmetauscher 21 und vor dem Ladeluftkühler 20 der bereits angesprochene Brennstoffzellenwärmetauscher 6 zur Temperierung der Brennstoffzelle 3. Über diesen Brennstoffzellenwärmetauscher 6 kann, je nach Bedarf, die Brennstoffzelle 3 für den Kaltstartfall erwärmt werden, oder Abwärme aus der Brennstoffzelle 3 kann im regulären Betrieb abgeführt werden. Der erste Kühlkreislauf 16 wird nun typischerweise im Kaltstartfall betrieben, indem das flüssige Kühlmedium, ausgehend von der Kühlmittelpumpe 18, zuerst dem Raumwärmetauscher 21, dann den Brennstoffzellenwärmetauscher 6, dann den Ladeluftkühler 20 und zuletzt die Heizeinrichtung 19 durchströmt. Der erste Kühlkreislauf 16 ist dabei vergleichsweise klein und hat eine entsprechend kleine thermische Masse. Hierdurch wird eine schnelle Aufheizung der Komponenten, insbesondere der Brennstoffzelle 3, durch die über die verdichtete Ladeluft von dem Ladeluftkühler 20 sowie bei Bedarf über die Heizeinrichtung 19 eingetragene Energie möglich. Bei Bedarf kann gleichzeitig der Innenraum des Fahrzeugs geheizt werden, indem der Raumwärmetauscher 21 von Luft durchströmt wird.

Für den regulären Betrieb des Brennstoffzellensystems 2 in dem Fahrzeug 1 ist nun typischerweise eine Kombination dieses ersten Kühlkreislaufs 16 mit dem zweiten Kühlkreislauf 17 vorgesehen, welcher eine weitere Kühlmittelpumpe 22 sowie einen Kühlwärmetauscher 23 zur Abfuhr von Wärme in die Umgebung des Fahrzeugs 1 aufweist. Um beispielsweise die Brennstoffzelle 3 über den Brennstoffzellenwärmetauscher 6 bei elektrischer Volllast des Brennstoffzellensystems 2, beispielsweise bei einer Bergfahrt des Fahrzeugs 1 mit hoher Geschwindigkeit, ausreichend kühlen zu können, wird das flüssige Kühlmedium über die beiden dann in Reihe wirkenden Kühlmittelpumpen 18, 22 umgewälzt. Hierdurch wird ein vergleichsweise großer Volumenstrom bei dennoch moderater Baugröße der beiden Kühlmittelpumpen 18, 22 erreicht. Hierdurch ist eine sehr gute Abkühlung der Brennstoffzelle 3 über den Brennstoffzellenwärmetauscher 6 möglich. Insbesondere kann dabei der Raumwärmetauscher 21 bei Bedarf parallel zum Kühlwärmetauscher 23 durchströmt werden, um weitere Wärme aus dem flüssigen Kühlmedium, in diesem Fall in den Innenraum des Fahrzeugs 1, abzuführen.

Ein weiterer Vorteil des Aufbaus besteht darin, dass der Ladeluftkühler 20 in Strömungsrichtung des flüssigen Kühlmediums nach dem Brennstoffzellenwärmetauscher 6 angeordnet ist. Hierdurch ist es möglich, die Eingangstemperatur des flüssigen Kühlmediums beim Einströmen in den Brennstoffzellenwärmetauscher 6 sehr gering vorzugeben, um so die Brennstoffzelle 3 ideal kühlen zu können. Da die Brennstoffzelle 3 typischerweise eine Temperatur von weniger als 100° C aufweist, ist das flüssige Kühlmedium auch nach der Brennstoffzelle 3 immer noch ausreichend "kühl", um im Ladeluftkühler die Temperatur der verdichteten Zuluft von typischerweise ca. 200° C so weit herunter zu kühlen, dass die Brennstoffzelle auch bei Volllast nicht unnötig belastet wird. Die Heizeinrichtung 19 ist in einer solchen Volllastsituation selbstverständlich abgeschaltet.

In der Darstellung der Figur 1 ist als weiterer Teil des zweiten Kühlkreislaufs 17 außerdem ein Heizwärmetauscher 24 zu erkennen. Dessen Aufgabe besteht nun darin, den nach der Expansion vergleichsweise kalten Wasserstoff aus dem Druckgasspeicher 7 zu erwärmen. Hierdurch wird eine Auskondensation von Flüssigkeit in dem Anodenbereich 4 der Brennstoffzelle 3 verhindert. Gleichzeitig wird in dem Heizwärmetauscher 24 das flüssige Kühlmedium abgekühlt, da es Wärme an den expandierten Wasserstoff abgibt. Idealerweise lässt sich so das flüssige Kühlmedium vor dem Eintritt in den Brennstoffzellenwärmetauscher 6 auf eine Temperatur abkühlen, welche unterhalb der Umgebungstemperatur, als minimale durch den Kühlwärmetauscher 23 zu erreichende Temperatur des flüssigen Kühlmediums, liegt. Dies führt zu einer besonders effizienten Kühlung der Brennstoffzelle 3 über den Brennstoffzellenwärmetauscher 6 und ermöglicht eine besonders hohe Kühlleistung der Kühlanordnung 15, sodass eine durch die Kühlanordnung 15 bedingte Leistungslimitierung des Brennstoffzellensystems 2 verhindert oder zumindest hinausgezögert werden kann. Hierdurch ist es auch bei einer hohen Umgebungstemperatur möglich, das Brennstoffzellenfahrzeug 1 mit hoher Leistung zu betreiben, was einen erheblichen Vorteil für den Nutzer des Fahrzeugs darstellt.

Weitere detaillierte Ausführungsformen der Kühlanordnung 15 gemäß der Erfindung sind in unterschiedlichen Betriebszuständen in den nachfolgenden Figuren nochmals näher dargestellt. Die bereits im Rahmen der Figur 1 erläuterten Komponenten sind dabei über vergleichbare schematische Symbole dargestellt, sodass hinsichtlich dieser Komponenten auf die Beschreibung der Figur 1 verwiesen werden kann.

In Figur 2 ist eine Kühlanordnung 15 analog zur Darstellung in Figur 1 zu erkennen. Der erste Kühlkreislauf 16 umfasst auch hier die erste Kühlmittelpumpe 18, in Strömungsrichtung danach den Brennstoffzellenwärmetauscher 6 der Brennstoffzelle 3, den Ladeluftkühler 20 sowie den Raumwärmetauscher 21 und die Heizeinrichtung 19. In dieser Reihenfolge werden die Bauteile bei geöffnetem Regelventil 25 im Aufheizbetrieb des Brennstoffzellensystems 2 durchströmt. Diese Durchströmung im Aufheizbetrieb ist strichpunktiert in Figur 2 angedeutet. Daneben ist gestrichelt der Betrieb im regulären Betriebsmodus zur Kühlung der Brennstoffzelle 3 angedeutet. Das Regelventil 25 wird hierfür ganz, oder bei entsprechendem Bedarf an Wärme für die Innenraumheizung zumindest teilweise geschlossen. Der hier gestrichelt eingezeichnete primäre Volumenstrom des flüssigen Kühlmediums strömt dann wiederum ausgehend von der ersten Kühlmittelpumpe 18 durch den Brennstoffzellenwärmetauscher 6 der Brennstoffzelle 3 sowie den Ladeluftkühler 20. Nach dem Ladeluftkühler 20 ist das flüssige Kühlmedium auf die in der Kühlanordnung 15 maximal auftretende Temperatur erwärmt und strömt in den Kühlwärmetauscher 23 ein. Durch die vergleichsweise hohe Temperaturdifferenz des in den Kühlwärmetauscher 23 einströmenden flüssigen Kühlmediums im Verhältnis zur Umgebungstemperatur lässt sich eine sehr effiziente Abkühlung des Kühlmediums in dem Kühlwärmetauscher 23 realisieren. Parallel zum Kühlwärmetauscher 23 ist in der Darstellung der Figuren 2 bis 4 jeweils ein Kühlmittelausgleichsbehälter 26 angedeutet. Dieser ist in der Kühlanordnung 15 typischerweise vorhanden, er ist für die Erfindung jedoch von untergeordneter Bedeutung, sodass hierauf nicht weiter eingegangen werden muss.

Nach dem Kühlwärmetauscher 23 strömt das Kühlmedium dann über drei parallele Zweige des zweiten Kühlkreislaufs 17 wieder zurück zur ersten Kühlmittelpumpe 18. Der mittlere Zweig umfasst dabei die zweite Kühlmittelpumpe 22, welche bei einem entsprechenden Bedarf eines hohen Volumenstroms an Kühlmedium in Reihe zur Kühlmittelpumpe 18 betrieben wird. Parallel zu dieser Kühlmittelpumpe 22, und daher nur von einem Teil des auftretenden Volumenstroms durchströmt, befindet sich wiederum der Heizwärmetauscher 24 zur Erwärmung des expandierten Wasserstoffs. In Strömungsrichtung danach ist ein weiterer Heizwärmetauscher 27 angeordnet, welcher zur Erwärmung des Wasserabscheiders 13 in der Abluftleitung 10 des Kathodenbereichs 5 dient. Im zweiten parallel zur Kühlmittelpumpe 22 angeordneten Leitungszweig befindet sich ein mit 28 bezeichneter lonentauscher. Dieser kann notwendig sein, um die Leitfähigkeit des flüssigen Kühlmediums während des Betriebs des Brennstoffzellensystems 2 dauerhaft zu reduzieren, um so ein unerwünschtes elektrisches Potenzial im Bereich des Kühlmediums und im Bereich von mit dem Kühlmedium in Kontakt stehenden geerdeten Bauteilen zu vermeiden. Der lonentauscher 28 arbeitet besonders effizient und für die Lebensdauer des lonentauschers 28 schonend, wenn dieser mit kühlem flüssigem Kühlmedium angeströmt wird. Er ist daher in Strömungsrichtung nach dem Kühlwärmetauscher 23 angeordnet, um so mit entsprechend abgekühltem Kühlmedium in Kontakt zu stehen. Ansonsten wird, wie bereits erwähnt, über die Heizwärmetauscher 24 und 27 ein Medium außerhalb der Kühlanordnung 15 beheizt und dadurch das flüssige Kühlmedium weiter abgekühlt. Dieses kommt dann mit entsprechend geringer Temperatur über die Kühlmittelpumpe 18 gefördert in dem Brennstoffzellenwärmetauscher 6 an und kann die Brennstoffzelle 3 so ideal abkühlen.

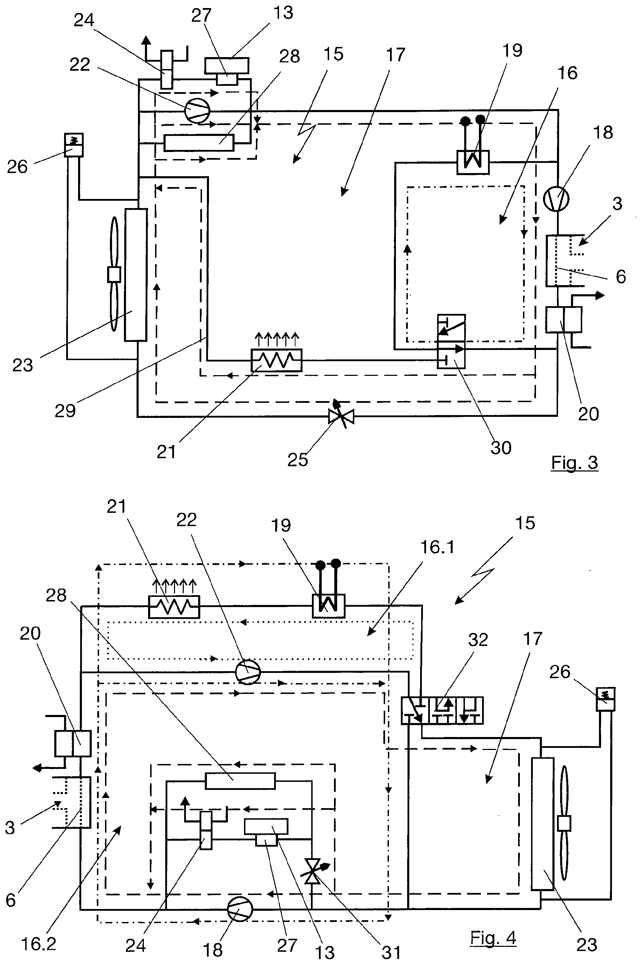

Der in den Figuren 3 analog zur Darstellung und Erläuterung in Figur 2 gezeigte Aufbau unterscheidet sich von dem in Figur 2 gezeigten Aufbau im Wesentlichen nur dadurch, dass das Regelventil 25 vom ersten Kühlkreislauf 16 in den zweiten Kühlkreislauf 17 und zwar in den Bereich zwischen dem Ladeluftkühler 20 und dem Kühlwärmetauscher 23 verlagert worden ist. Außerdem befindet sich der Raumwärmetauscher 21 nun in einem Kühlerbypass 29, welcher über eine Ventileinrichtung 30 so angesteuert werden kann, dass der Raumwärmetauscher 21 ganz oder je nach Stellung des Regelventils 25 teilweise parallel zu dem Kühlwärmetauscher 23 durchströmt werden kann. Die Stellung der Ventileinrichtung 30 in der Darstellung der Figur 3 verhindert dies jedoch, indem sie den Kühlerbypass 29 entsprechend trennt und den ersten Kühlkreislauf 16 schließt. Damit kann, ohne eine Beheizung des Innenraums des Fahrzeugs 1, eine Aufheizung der Brennstoffzelle 3 über den Brennstoffzellenwärmetauscher 6 analog zur Darstellung in Figur 2 erfolgen. Dies ist auch in Figur 3 durch die strichpunktiert angedeutete Strömung des Kühlmediums gezeigt. Im regulären Kühlbetrieb des Brennstoffzellensystems 2, wie er gestrichelt angedeutet ist, wird die Ventileinrichtung 30 entsprechend umgeschaltet, sodass, wie oben bereits erwähnt, der Raumwärmetauscher 21 und der Kühlwärmetauscher 23 parallel durchströmt werden können. Ansonsten entspricht der Aufbau in seiner Funktionalität dem in Figur 2 bereits beschriebenen Aufbau.

Das Ausführungsbeispiel der Kühlanordnung 15 gemäß Figur 3 bietet dabei nicht den Komfort für die Insassen des Fahrzeugs, wie das zuvor beschriebene Ausführungsbeispiel der Kühlanordnung 15. Allerdings erlaubt es eine schnellere Erwärmung der Brennstoffzelle und damit eine kürzere Startzeit für das Fahrzeug 1, was einen so erheblichen Vorteil darstellt, dass die damit einhergehende Komforteinbuße für die Nutzer sicherlich in Kauf genommen oder durch eine unabhängige Zusatzheizung ausgeglichen werden kann.

In der Darstellung der Figur 4 ist ein weiterer denkbarer Aufbau einer Kühlanordnung 15 dargestellt. Anders als bei den bisherigen Ausführungsformen ist es hier so, dass der erste Kühlkreislauf 16 in zwei Teilkreisläufe 16.1 und 16.2 unterteilt ist. Der erste Teilkreislauf 16.1 umfasst die zweite Kühlmittelpumpe 22 sowie den Raumwärmetauscher 21 und die Heizeinrichtung 19. Der andere Teilkreislauf 16.2 umfasst die erste Kühlmittelpumpe 18, die Brennstoffzelle 3 mit ihrem Brennstoffzellenwärmetauscher 6 sowie den Ladeluftkühler 20. In der Darstellung der Figur 4 ist wiederum analog zu den vorhergehenden Figuren der Betrieb zum Aufheizen der Brennstoffzelle 3 strichpunktiert dargestellt. Ein Regelventil 31, über welches die zum zweiten Kühlkreislauf 17 zählenden Heizwärmetauscher 24 und 27 sowie parallel hierzu der lonentauscher 28 eingebunden sind, ist in dieser Situation typischerweise geschlossen. Eine Ventileinrichtung 32, welche drei verschiedene Ventilstellungen ermöglicht, ist anders als wie gezeigt, in ihre ganz nach links geschobene Position geschaltet. Nun kann das flüssige Kühlmedium, von der ersten Kühlmittelpumpe 18 gefördert, zuerst durch den Brennstoffzellenwärmetauscher 6, dann durch den Ladeluftkühler 20 und anschließend durch den Raumwärmetauscher 21 und durch die Heizeinrichtung 19 strömen. Hierdurch wird der strichpunktiert angedeutete Kreislauf aufgebaut. Durch die spezielle Ausgestaltung der Ventileinrichtung 32 ist es außerdem möglich, dass auch hier die zweite Kühlmittelpumpe 22 bereits unterstützend eingreift. Eine alternative Ausgestaltung, bei welcher der Leitungszweig mit der zweiten Kühlmittelpumpe 22 abgesperrt ist, wäre jedoch ebenso denkbar.

In der Darstellung der Figur 4 ist gestrichelt wiederum der reguläre Betrieb zur Kühlung der Brennstoffzelle 3 dargestellt. Die Ventileinrichtung 32 ist nun, wie gezeigt, in ihre ganz nach rechts geschobene Position geschaltet, so dass der die zweite Kühlmittelpumpe 22 aufweisende Zweig mit dem Kühlwärmetauscher 23 verbunden ist. Hierdurch wird eine Durchströmung entsprechend der gestrichelten Linie erreicht, wobei bei geöffnetem Regelventil 31 auch der lonentauscher 28 sowie die Heizwärmetauscher 24 und 27 zur Abkühlung des flüssigen Kühlmediums mit durchströmt werden können. Der Aufbau entspricht dabei den zuvor beschriebenen Aufbauten, sodass auch hier in Strömungsrichtung thermisch wirksam vor dem Kühlwärmetauscher 23 der Ladeluftkühler 20 angeordnet ist, um eine möglichst hohe Temperatur und damit eine effiziente Abkühlung des flüssigen Kühlmediums in dem Kühlwärmetauscher 23 zu erreichen.

In der Darstellung der Figur 4 ist punktiert eine dritte denkbare Ausführungsvariante des Betriebs der Kühlanordnung 15 dargestellt. In diesem Betrieb ist die Ventileinrichtung 32 auf ihre mittlere Position geschaltet. Hierdurch wird der die zweite Kühlmittelpumpe 22 aufweisende Leitungszweig unmittelbar mit dem Leitungszweig verbunden, welcher die Heizeinrichtung 19 und den Raumwärmetauscher 21 aufweist. Bei einem Betrieb der zweiten Kühlmittelpumpe 22 und der Heizeinrichtung 19 lässt sich so eine Beheizung des Innenraums des Fahrzeugs 1 realisieren über den Teilkreislauf 16.1, ohne dass andere Komponenten der Kühlanordnung 15 durchströmt und betrieben werden müssen. Von diesem Zustand kann dann unmittelbar in den strichpunktiert angedeuteten Zustand gewechselt werden, um so neben dem Innenraum auch die Brennstoffzelle 3 aufzuheizen und das Fahrzeug 1 nachfolgend starten zu können. Der Aufbau der Kühlanordnung 15 gemäß dem in Figur 4 dargestellten Ausführungsbeispiel ermöglicht somit zusätzlich die Funktionalität einer Standheizung für das Fahrzeug 1.

Alles in allem ist die Kühlanordnung 15 in allen beschriebenen Ausführungsformen sehr effizient, da sie immer einen ersten Kühlkreislauf 16 mit vergleichsweise geringer thermischer Masse aufweist, um die Brennstoffzelle 3 hoch zu heizen. Dies kann mit einer kleinen und effizienten ersten Kühlmittelpumpe 18 erfolgen, welche für den Fall der Kühlung der Brennstoffzelle 3 dann durch die zweite Kühlmittelpumpe 22 in Reihe hierzu und das Freischalten des zweiten Kühlkreislaufs 17 unterstützt wird. Außerdem ist die Anordnung der Komponenten in der Strömungsrichtung des flüssigen Kühlmediums so ausgewählt, dass ideale thermische Bedingungen herrschen und einerseits eine sehr gute Kühlung der Brennstoffzelle 3 und andererseits eine sehr gute Abkühlung des flüssigen Kühlmediums in dem Kühlwärmetauscher 23 und/oder dem Raumwärmetauscher 21 realisiert werden kann. Die Kühlanordnung 15 ist damit in allen beschriebenen Ausführungsformen besonders vorteilhaft und effizient zur Kühlung des Brennstoffzellensystems 2, insbesondere in dem Fahrzeug 1, geeignet. Selbstverständlich kann die Kühlanordnung 15 auch bei stationären Brennstoffzellensystemen 2 in der beschriebenen Art und Weise - dann typischerweise ohne den Raumwärmetauscher 21 - vorteilhaft eingesetzt werden.

## Patentansprüche

1. Kühlanordnung (15) zum Kühlen einer Brennstoffzelle (3) in einem Brennstoffzellensystem (2), mit wenigstens zwei fluidisch verbundenen Kühlkreisläufen (16, 17), in welchen ein flüssiges Kühlmedium strömt, wobei der erste Kühlkreislauf (16) eine erste Kühlmittelpumpe (18), einen Brennstoffzellenwärmetauscher (6), eine Heizeinrichtung (19) sowie einen Ladeluftkühler (20), welcher in wärmetauschendem Kontakt zur Brennstoffzelle (3) strömender verdichteter Zuluft steht, umfasst, und wobei der zweite Kühlkreislauf (17) einen Kühlwärmetauscher (23) zur Abkühlung des flüssigen Kühlmediums umfasst,
**dadurch gekennzeichnet, dass**
wenigstens eine weitere Kühlmittelpumpe (22) vorgesehen ist.

2. Kühlanordnung (15) nach Anspruch 1,
**dadurch gekennzeichnet, dass**
der Ladeluftkühler (20) in Strömungsrichtung des flüssigen Kühlmediums nach dem Brennstoffzellenwärmetauscher (6) angeordnet ist.

3. Kühlanordnung (15) nach Anspruch 1 oder 2,
**dadurch gekennzeichnet, dass**
ein Raumwärmetauscher (21) zur zumindest mittelbaren Erwärmung eines Raumes in einem der Kühlkreisläufe (16, 17) vorgesehen ist.

4. Kühlanordnung (15) nach Anspruch 3,
**dadurch gekennzeichnet, dass**
der Raumwärmetauscher (21) in dem ersten Kühlkreislauf (16) angeordnet ist.

5. Kühlanordnung (15) nach Anspruch 3 oder 4,
**dadurch gekennzeichnet, dass**
der erste Kühlkreislauf (16) zwei Teilkreisläufe (16.1, 16.2) aufweist, welche beide eine Kühlmittelpumpe (18, 22) aufweisen, wobei der Raumwärmetauscher (21) und die Heizeinrichtung (19) in demselben Teilkreislauf (16.1) angeordnet sind, und wobei der Brennstoffzellenwärmetauscher (6) in dem anderen Teilkreislauf (16.2) angeordnet ist.

6. Kühlanordnung (15) nach Anspruch 3, 4 oder 5,
**dadurch gekennzeichnet, dass**
der Raumwärmetauscher (21) in einer Kühlerbypassleitung (29) um den Kühlwärmetauscher (23) angeordnet ist.

7. Kühlanordnung (15) nach einem der Ansprüche 1 bis 6,
**dadurch gekennzeichnet, dass**
wenigstens ein Heizwärmetauscher (24, 27) zum Erwärmen einer diesem zugeordneten Komponente und/oder einem diesen durchströmendes Medium in Strömungsrichtung vor dem Brennstoffzellenwärmetauscher (6) angeordnet ist.

8. Kühlanordnung (15) nach Anspruch 7,
**dadurch gekennzeichnet, dass**
der wenigstens eine Heizwärmetauscher (24, 27) in einem Pumpenbypass um eine der Kühlmittelpumpen (18, 22) angeordnet ist.

9. Kühlanordnung (15) nach Anspruch 7 oder 8,
**dadurch gekennzeichnet, dass**
hinsichtlich der Durchströmung mit dem flüssigen Kühlmedium parallel zu dem wenigstens einen Heizwärmetauscher (24, 27) ein lonentauscher (28) angeordnet ist.

10. Kühlanordnung (15) nach Anspruch 7, 8 oder 9,
**dadurch gekennzeichnet, dass**
der wenigstens eine Heizwärmetauscher (24, 27) zum Beheizen von expandiertem Brennstoff für die Brennstoffzelle (3) und/oder zum Beheizen eines Flüssigkeitsabscheiders (13) ausgebildet ist.

## Claims

1. Cooling assembly (15) for cooling a fuel cell (3) in a fuel cell system (2), the assembly comprising at least two fluidically connected cooling circuits (16, 17), in which a liquid cooling medium flows, wherein the first cooling circuit (16) comprises a first coolant pump (18), a fuel cell heat exchanger (6), a heating device (19) and an intercooler (20) in heat-exchanging contact with compressed supply air flowing to the fuel cell (3), and wherein the second cooling circuit (17) comprises a cooling heat exchanger (23) for cooling the liquid cooling medium,
**characterised in that**
at least one further coolant pump (22) is provided.

2. Cooling assembly (15) according to claim 1,
**characterised in that**
the intercooler (20) is arranged downstream of the fuel cell heat exchanger (6) in the direction of flow of the liquid cooling medium.

3. Cooling assembly (15) according to claim 1 or 2,
**characterised in that**
a space heat exchanger (21) is provided for the at least indirect heating of a space in one of the cooling circuits (16, 17).

4. Cooling assembly (15) according to claim 3,
**characterised in that**
the space heat exchanger (21) is located in the first cooling circuit (16).

5. Cooling assembly (15) according to claim 3 or 4,
**characterised in that**
the first cooling circuit (16) has two sub-circuits (16.1, 16.2), each having a coolant pump (18, 22), wherein the space heat exchanger (21) and the heating device (19) are located in the same sub-circuit (16.1) and the fuel cell heat exchanger (6) is located in the other sub-circuit (16.2).

6. Cooling assembly (15) according to claim 3, 4 or 5,
**characterised in that**
the space heat exchanger (21) is arranged in a radiator bypass line (29) around the cooling heat exchanger (23).

7. Cooling assembly (15) according to any of claims 1 to 6, **characterised in that**
at least one heating heat exchanger (24, 27) is arranged upstream of the fuel cell heat exchanger (6) in the direction of flow for heating an associated component and/or a medium flowing through it.

8. Cooling assembly (15) according to claim 7,
**characterised in that**
the at least one heating heat exchanger (24, 27) is arranged in a pump bypass around one of the coolant pumps (18, 22).

9. Cooling assembly (15) according to claim 7 or 8,
**characterised in that**
in respect of the passage of the liquid cooling medium, an ion exchanger (28) is arranged parallel to the at least one heating heat exchanger (24, 27).

10. Cooling assembly (15) according to claim 7, 8 or 9,
**characterised in that**
the at least one heating heat exchanger (24, 27) is designed to heat expanded fuel for the fuel cell (3) and/or to heat a liquid separator (13).

## Revendications

1. Agencement de refroidissement (15) destiné à refroidir une pile à combustible (3) dans un système (2) de piles à combustible, comprenant au moins deux circuits de refroidissement (16, 17) en communication fluidique l'un avec l'autre, dans lesquels circule un réfrigérant liquide, le premier circuit de refroidissement (16) comportant une première pompe de réfrigérant (18), un échangeur de chaleur de pile à combustible (6), un dispositif de chauffage (19) ainsi qu'un refroidisseur intermédiaire (20 qui est en contact par échange de chaleur avec la pile à combustible (3) de l'air comprimé qui circule, et le second circuit de refroidissement (17) comportant un échangeur de chaleur de refroidissement (23) destiné à refroidir le réfrigérant liquide, **caractérisé en ce qu'**au moins une autre pompe de réfrigérant (22) est installée.

2. Agencement de refroidissement (15) selon la revendication 1, **caractérisé en ce que** le refroidisseur intermédiaire (20) est disposé dans la direction d'écoulement du réfrigérant liquide en aval de l'échangeur de chaleur (6) de piles à combustible.

3. Agencement de refroidissement (15) selon la revendication 1 ou la revendication 2, **caractérisé en ce qu'**un échangeur de chaleur d'espace(21) assure au moins le chauffage indirect d'un espace dans l'un des circuits de refroidissement (16, 17).

4. Agencement de refroidissement (15) selon la revendication 3, **caractérisé en ce que** l'échangeur de chaleur d'espace (21) est disposé dans le premier circuit de refroidissement (16).

5. Agencement de refroidissement (15) selon la revendication 3 ou la revendication 4, **caractérisé en ce que** le premier circuit de refroidissement (16) comporte deux circuits partiels (16.1, 16.2) qui comportent chacun une pompe de réfrigérant (18, 22), l'échangeur de chaleur d'espace (21) et le dispositif de chauffage (19) sont disposés dans le même circuit partiel (16.1) et l'échangeur de chaleur de piles à combustible (6) est disposé dans l'autre circuit partiel (16.2).

6. Agencement de refroidissement (15) selon la revendication 3, 4 ou5, **caractérisé en ce que** l'échangeur de chaleur d'espace (21) est disposé dans une conduite de dérivation du refroidisseur (29) autour de l'échangeur de chaleur de refroidissement (23).

7. Agencement de refroidissement (15) selon l'une quelconque des revendications 1 à 6, **caractérisé en ce qu'**au moins un échangeur de chaleur de chauffage (24, 27) destiné à chauffer un desdits composants associés et/ou un réfrigérant s'y écoulant dans la direction d'écoulement en amont de l'échangeur de chaleur de piles à combustible (6).

8. Agencement de refroidissement (15) selon la revendication 7, **caractérisé en ce que** l'au moins un échangeur de chaleur de chauffage (24, 27) est disposé dans une dérivation de pompe autour d'une des pompes de réfrigérant (18, 22).

9. Agencement de refroidissement (15) selon la revendication 7 ou la revendication 8, **caractérisé en ce qu'**en ce qui concerne l'écoulement du réfrigérant liquide un échangeur d'ions (28) est disposé en parallèle avec l'au moins un échangeur de chaleur de chauffage (24, 27).

10. Agencement de refroidissement (15) selon la revendication 7, 8 ou 9, **caractérisé en ce que** l'au moins un échangeur de chaleur de chauffage (24, 27) est conçu pour chauffer le combustible expansé pour la pile à combustible (3) et/ou pour chauffer un séparateur de liquide (13).
